Europäisches Patentamt

European Patent Office

Office européen des brevets

(19)

(11) Veröffentlichungsnummer: **0 024 331**
**B1**

(12) **EUROPÄISCHE PATENTSCHRIFT**

(45) Veröffentlichungstag der Patentschrift:
25.05.83

(21) Anmeldenummer: 80104629.3

(22) Anmeldetag: 06.08.80

(51) Int. Cl.³: **C 08 L  69/00,** C 08 J  3/20

(54) Verfahren zur Herstellung von flammwidrigen Polycarbonaten.

(30) Priorität: 17.08.79  DE 2933344

(43) Veröffentlichungstag der Anmeldung:
04.03.81 Patentblatt 81/9

(45) Bekanntmachung des Hinweises auf die Patenterteilung:
25.05.83 Patentblatt 83/21

(84) Benannte Vertragsstaaten:
DE FR GB IT NL

(56) Entgegenhaltungen:
DE-A-1 930 257
DE-A-2 149 311
DE-A-2 460 052
DE-A-2 744 018

(73) Patentinhaber: BAYER AG, Zentralbereich Patente,
Marken und Lizenzen, D-5090 Leverkusen 1, Bayerwerk
(DE)

(72) Erfinder: Druschke, Frank, Dr., Sickstrasse 84,
D-7000 Stuttgart (DE)
Erfinder: Margotte, Dieter, Dr., Wedelstrasse 48,
D-4150 Krefeld (DE)
Erfinder: Tresper, Erhard, Dr., Dahlerdyk 154,
D-4150 Krefeld (DE)
Erfinder: Bottenbruch, Luwig, Dr., Woehlerstrasse 5,
D-4150 Krefeld (DE)
Erfinder: Cohnen, Wolfgang, Dr., Heymannstrasse 36,
D-5090 Leverkusen (DE)
Erfinder: Hucks, Uwe, Am Marienstift 30, D-4234 Alpen
(DE)

BUNDESDRUCKEREI BERLIN

# 0 024 331

## Verfahren zur Herstellung von flammwidrigen Polycarbonaten

Die vorliegende Erfindung betrifft ein Verfahren zur Herstellung von flammwidrigen Polycarbonaten, durch Zusatz von salzartigen Flammschutzmitteln, das dadurch gekennzeichnet ist, daß die salzartigen Flammschutzmittel als wäßrige Lösungen in den neutral und elektrolytfrei gewaschenen Lösungen der Polycarbonate in organischen Lösungsmitteln so dispergiert, daß der mittlere Teilchendurchmesser der wäßrigen Phase in der organischen Phase unter 2 μm liegt, und danach durch Abdampfen des Lösungsmittels und des Wassers die Polycarbonate in üblicher Weise isoliert werden.

Als salzartige Flammschutzmittel sind beispielsweise die bekannten Alkalisalze, Erdalkalisalze, Übergangsmetallsalze organischer und anorganischer Säuren zu verstehen.

Die Einarbeitung der salzartigen Flammschutzmittel kann in Mengen von 0,001 bis 5 Gew.-%, vorzugsweise in Mengen von 0,003 bis 2 Gew.-%, insbesondere in Mengen von 0,005 bis 0,5 Gew.-%, bezogen jeweils auf Gesamtgewicht aus Polycarbonat und salzartigem Flammschutzmittel, erfolgen.

Bekannt ist die Flammwidrigkeit aromatischer Polycarbonate durch Zusatz von Salzen organischer oder anorganischer Säuren, wie insbesondere Alkalisalzen zu verbessern. Derartige flammhemmend ausgerüstete Polycarbonate sind beispielsweise in der DE-OS 1 930 257, der DE-OS 2 149 311 und in der DE-OS 2 744 018 beschrieben.

Die Einarbeitung derartiger Salze erfolgte bislang entweder direkt in die Schmelze der Polycarbonate oder durch Vereinigung mit der Polycarbonatlösung, wobei im letzteren Falle eine Lösung der Salze in organischen Lösungsmitteln bevorzugt wurde (siehe DE-OS 24 60 052). Nachteilig dabei ist allerdings, daß ein Großteil der für Polycarbonat günstigen Flammschutzmittel in der bei der Polycarbonatherstellung geeigneten organischen Phase schlecht löslich sind.

Gemäß DE-OS 2 744 018 ist es bekannt, daß im Interesse besserer optischer Eigenschaften des flammfesten Polycarbonats die Zugabe der Flammschutzmittel anstelle in fein verteilter Form in Form einer Lösung, insbesondere in Form einer wäßrigen Lösung auf der Polycarbonatoberfläche aufgebracht wird und nach Trocknung in üblicher Weise extrudiert wird. Dieses Verfahren bietet gegenüber den herkömmlichen Verfahren, in denen die Flammschutzmittel in fester Form über bekannte Mischaggregate den Polycarbonaten einverleibt werden, keinerlei Vorteile bezüglich Verteilung und flammwidriger Wirksamkeit der jeweils eingesetzten Flammschutzmittel.

Es war nun nicht zu erwarten, daß die wäßrigen Lösungen von Flammschutzmitteln über eine organische Phase im Polycarbonat so gut verteilt werden können, daß ihre Wirksamkeit deutlich überlegen ist gegenüber der Wirksamkeit von konventionell als Feststoffe zudosierten Flammschutzmitteln.

Um eine gleichmäßige Verteilung der wäßrigen Salzlösung, in der die flammhemmend wirkenden Salze gelöst sind, in der organischen Phase zu erreichen, ist es vorteilhaft, Dispergiergeräte, Hochdruckhomogenisatoren sowie alle zur Herstellung von Emulsion üblichen Vorrichtungen, beispielsweise Supratongeräte zu verwenden. Ihre Eignung richtet sich nach der Art der verwendeten organischen Lösungsmittel, der Polycarbonatkonzentration in diesem Lösungsmittel bzw. Lösungsmittelgemisch und der Art der herzustellenden Mischung aus Polycarbonatlösung und der wäßrigen Salzlösung. Dabei ist es erforderlich, daß der mittlere Teilchendurchmesser der wäßrigen Phase in der organischen Phase unter 2 μm liegt.

Die Mengen an flammhemmend wirkenden Salzen, welche als wäßrige Lösung gemäß dem erfindungsgemäßen Verfahren jeweils den Polycarbonatlösungen zuzusetzen sind, richten sich nach dem gewünschten Gehalt im flammwidrig einzustellenden Polycarbonat, wobei die Konzentration der Salze je nach Löslichkeit in Wasser zwischen 0,05 Gew.-% bis 50 Gew.-%, vorzugsweise zwischen 0,05 und 30 Gew.-%, bezogen auf Gewicht wäßrige Salzlösung, liegt. Die Konzentration an Polycarbonat in der organischen Phase ist üblicherweise zwischen etwa 10 Gew.-% und 20 Gew.-%, bezogen auf Polycarbonat und organisches Lösungsmittel. Das Mengenverhältnis zwischen wäßriger Salzlösung und organischer Phase liegt zwischen 0,01 bis 3 Gew.-Teile pro 100 Gew.-Teile organischer Phase.

Darüber hinaus kann die homogene Durchmischung der Phasen durch die Verwendung geeigneter Emulgatoren in üblichen Mengen gefördert werden. Geeignete Emulgatoren sind beispielsweise die Alkalisalze von höheren Fettsäuren, von Alkylsulfonaten, von Alkylsulfaten, von Alkylarylsulfonaten und von Sulfosuccinatestern.

Die homogene Durchmischung kann bei Temperaturen zwischen etwa 20° C und 80° C erfolgen.

Aus den erhaltenen Emulsionen wird das salzhaltige Polycarbonat anschließend nach bekannten Verfahren, beispielsweise durch Eindampfverfahren, isoliert.

Eine besonders vorteilhafte Ausführungsform zur Dispergierung besteht darin, daß man die wäßrige Salzlösung mit der elektrolytfrei gewaschenen Polycarbonatlösung unmittelbar vor der Verdampfung, des Lösungsmittels und des Wassers zusammenführt, wobei man sich beispielsweise dem in der DE-OS 1 921 045 beschriebenen Verdampfungsverfahren bedient.

Die salzhaltigen Polycarbonate werden anschließend über einen Ausdampfextruder isoliert, als Strang abgezogen und granuliert.

Die im Polycarbonat gefundene Salzkonzentration entspricht weitgehend der mit der wäßrigen

2

Lösung zudosierten Salzmenge. Bei einigen Salzen empfiehlt es sich jedoch, die zudosierte Salzmenge um ca. 5 Gew.-%, bezogen auf die jeweils im Polycarbonat erforderliche Salzmenge, zu erhöhen.

Der Vorteil des erfindungsgemäßen Verfahrens gegenüber den obengenannten bekannten Einarbeitungsverfahren besteht darin, daß erheblich geringere Mengen dieser als Flammschutzmittel wirkenden, vorwiegend wasserlöslichen Salze notwendig sind, um die Polycarbonate mit einer bestimmten Flammwidrigkeit auszustatten.

Unter Polycarbonaten, die zur erfindungsgemäßen Herstellung schwerentflammbarer Polycarbonat-Zusammensetzungen verwendet werden können, sind solche Homo- und/oder Copolycarbonate zu verstehen, denen z. B. eines oder mehrere der folgenden Diphenole zugrundeliegen:

    2,2-Bis-(4-hydroxyphenyl)-propan
    2,4-Bis-(4-hydroxyphenyl)-2-methylbutan
    1,1-Bis-(4-hydroxyphenyl)-cyclohexan
    α,α'-Bis-(4-hydroxyphenyl)-p-diisopropylbenzol
    2,2-Bis-(3-methyl-4-hydroxyphenyl)-propan
    4,4'-Dihydroxydiphenylether

Diese und weitere geeignete Diphenole sind z. B. in der US-Patentschrift 3 038 365, in den deutschen Offenlegungsschriften 1 570 703, 2 036 050 und in der Monographie »H. Schnell, Chemistry and Physics of Polycarbonates, Interscience Publishers, New York, 1964« beschrieben.

Bevorzugte Diphenole sind z. B.:

    2,2-Bis-(4-hydroxyphenyl)-propan
    1,1-Bis-(4-hydroxyphenyl)-cyclohexan
    α,α'-Bis-(4-hydroxyphenyl)-p-diisopropylbenzol

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als bevorzugt genannten Diphenole zugrundeliegen. Besonders bevorzugt sind weiterhin Polycarbonate allein auf Basis von 2,2-(4-hydroxyphenyl)-propan.

Die aromatischen Polycarbonate können nach den bekannten Lösungsverfahren, wie sie in der obengenannten Literatur beschrieben sind, hergestellt werden, so beispielsweise nach dem in homogener Phase durchgeführten sogenannten Pyridin-Verfahren oder dem Zweiphasengrenzflächenverfahren aus Bisphenolen und Phosgen.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, insbesondere solchen mit drei oder mehr als drei phenolischen Hydroxygruppen verzweigt sein.

Polycarbonate dieser Art sind beispielsweise in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 2 500 092 beschrieben.

Die thermoplastischen aromatischen Polycarbonate sollen in der Regel mittlere Gewichtsmittel-Molekulargewichte $M_w$ von 10 000 bis über 200 000, vorzugsweise 20 000 bis 50 000 haben, ermittelt durch Messungen der rel. Viskosität in $CH_2Cl_2$ und 25°C und einer Konzentration von 0,5 Gew.-% nach vorheriger Eichung der Viskositätskurve durch Messung der Polycarbonatmolekulargewichte nach der Lichtzerstreumethode.

Neutral und elektrolytfrei gewaschene Lösungen der nach dem erfindungsgemäßen Verfahren flammwidrig einzustellenden thermoplastischen, aromatischen Polycarbonate sind in bekannter Weise herstellbar gemäß der bekannten Polycarbonatherstellung nach dem Lösungsverfahren, wobei als organische Lösungsmittel beispielsweise Chlorbenzol, Methylenchlorid sowie Mischungen daraus besonders gut geeignet sind.

Beispiele für erfindungsgemäß einsetzbare Polycarbonatlösungen sind in der deutschen Auslegeschrift 1 300 266 und der DE-OS 2 410 716 beschrieben.

Die für das erfindungsgemäße Verfahren verwendeten salzartigen Flammschutzmittel sind beispielsweise Salze von anorganischen Protonensäuren. Anorganische Protonensäuren im Sinne der Erfindung sind Brönsted-Säuren, die Alkali- oder Erdalkalisalze bilden können (zum Ausdruck »Brönsted-Säuren« vgl. Fieser & Fieser »Organic Chemistry«, 1965, S. 595, Interscience Publishers N. Y., USA), wie z. B. Schwefelsäure, Fluorwasserstoffsäure, Salzsäure, Bromwasserstoffsäure, meta-, ortho- oder pyro-Phosphorsäure und Protonensäuren komplexer Fluormetallverbindungen. Als derartige Alkali- oder Erdalkalisalze komplexer Fluormetallverbindungen können beispielsweise verwendet werden:

Hexafluoraluminate
Hexafluortitanate
Hexafluorantimonate
Hexafluorsilikate
Hexafluorwolframate
Hexafluorzirkonate
Hexafluorphosphate
Tetrafluorborate

Weiterhin sind auch Borate, wie Natrium- und Kaliumborate geeignet.

Von den anorganischen Halogeniden sind beispielsweise Natriumchlorid, Lithiumchlorid, Kaliumjodid, Natriumbromid, Lithiumbromid, Calciumchlorid, Kaliumbromid, Magnesiumchlorid und Kaliumchlorid zu nennen.

Erfindungsgemäß verwendbare salzartige Flammschutzmittel sind beispielsweise auch Salze organischer Säuren. Organische Säuren im Sinne der Erfindung sind solche von organischen Brönsted-Säuren mit mindestens einem Kohlenstoffatom, die Alkali- oder Erdalkalisalze bilden können.

Solche gegebenenfalls substituierte organische Säuren können OH- oder NH-acide Verbindungen sein, wie beispielsweise Carbonsäuren, Sulfonsäuren, Phosphonsäuren, Thiophosphonsäuren, NH-acide Sulfonamide oder Sulfonimide, mono- oder mehrfunktionelle Phenole oder Alkohole.

Insbesondere seien genannt:

Natrium- oder Kaliumperfluorbutansulfat,
Natrium- oder Kaliumperfluormethansulfonat,
Natrium- oder Kalium-2,5-dichlorbenzolsulfat,
Natrium- oder Kalium-2,4,5-trichlorbenzolsulfat,
Natrium- oder Kalium-(4-chlorphenyl)-phosphonat,
Natrium- oder Kalium-methylphosphonat,
Natrium- oder Kalium-(2-phenyl-ethylen)-phosphonat,
Natrium- oder Kaliumpentachlorbenzoat,
Natrium- oder Kalium-2,4,6-trichlorbenzoat,
Natrium- oder Kalium-2,4-dichlorbenzoat,
Natrium- oder Kalium-2-ethyl-capronsäure,
Litium-phenylphosphonat,
Lithium-4-dodecylphenylsulfonat,
Lithium-4-nonyl-2,5-dichlorphenylsulfonat.

Weitere geeignete Alkali- und/oder Erdalkalisalze im Sinne der Erfindung sind beispielsweise in DE-OS-2 460 935, 2 460 944, 2 460 945, 2 460 946, 2 461 145, 2 535 261, 2 535 262, 2 535 263, 2 631 756, 2 643 256, 2 644 114, 2 645 415, 2 646 120, 2 647 271, 2 648 131, 2 653 327, 2 648 128, 2 744 015, 2 744 016, 2 744 017, 2 744 018, 2 745 592, 2 746 906 beschrieben.

Geeignete salzartige Flammschutzmittel sind beispielsweise auch die Übergangsmetallsalze, wie etwa die Nickelsalze, vorstehend genannter anorganischer und organischer Säuren geeignet.

Die salzartigen Flammschutzmittel können für sich allein oder in Kombination mit anderen Salzen, insbesondere solchen, die die Schwerentflammbarkeit der Polycarbonat-Zusammensetzungen synergistisch beeinflussen, verwendet werden.

Vorzugsweise einsetzbare salzartige Flammschutzmittel sind die Alkalisalze und Erdalkalisalze, insbesondere die Alkalisalze.

Die nach dem erfindungsgemäßen Verfahren hergestellten flammwidrigen Formmassen können nach den üblichen thermoplastischen Verarbeitungsmethoden wie durch Extrusion oder Spritzguß zu Folien und Formteilen verarbeitet werden.

Die nach dem erfindungsgemäßen Verfahren flammwidrigen Polycarbonatformmassen können außerdem weitere Zusätze wie Antistatika, Pigmente, Formtrennmittel, Stabilisatoren und Füllstoffe enthalten.

Die Verwendung der erfindungsgemäßen Formmassen kann überall dort erfolgen, wo bislang flammwidrige Polycarbonate mit Erfolg verwendet werden, z. B. im Elektrosektor und im Maschinenbausektor.

Zur Prüfung der Flammwidrigkeit wurden je 5 Prüfstäbe mit den Abmessungen 127 mm × 12,7 mm × 1,6—3,2 mm im Spritzgußverfahren hergestellt und dem Brenntest gemäß UL-94 unterworfen. Die Ergebnisse sind in Tabelle II zusammengestellt.

Die folgenden Beispiele sollen die Erfindung näher erläutern.

**0 024 331**

### Arbeitsvorschrift

In 71,5 kg einer kontinuierlich hergestellten, elektrolytfrei gewaschenen, 14 Gew.-%igen Polycarbonatlösung, (siehe beispielsweise DE-AS 1 300 266 oder DE-OS 2 410 716), wird jeweils 1 kg der wäßrigen Salzlösung mit den in Tabelle I angegebenen Salzkonzentrationen kontinuierlich mit einer hochtourigen Kreiselpumpe emulgiert. Die Mischung wird sofort in einen Dünnschichtverdampfer eingespeist und ein Teil des Lösungsmittels bzw. Lösungsmittelgemisches und des Wassers abdestilliert. Die aufkonzentrierte Lösung wird in einem Ausdampfextruder im Vakuum vom Restlösungsmittel befreit. Die Polycarbonatschmelze wird als Strang abgezogen, granuliert und zu Prüfstäben für den Brenntest nach UL Subj. 94 verarbeitet.

Tabelle I

Verfahrensbedingungen

| Beispiel | verwendetes Polycarbonatlösungsmittel | rel. Lösungs-viskosität | Salzkonzentration der wäßrigen Lösung (Gew.-%) |
|---|---|---|---|
| 1 | Methylenchlorid/Chlorbenzol (60/40) | 1,293 | 0 |
| 2 | Methylenchlorid/Chlorbenzol (60/40) | 1,295 | 0,08 |
| 3 | Methylenchlorid/Chlorbenzol (50/50) | 1,289 | 0,25 |
| 3a (Vergleichsvers) | Methylenchlorid/Chlorbenzol (50/50) | 1,295 | **) |
| 3b (Vergleichsvers) | Methylenchlorid/Chlorbenzol (50/50) | 1,295 | ***) |
| 4 | Methylenchlorid/Chlorbenzol (60/40) | 1,296 | 0,09 |
| 5 | Chlorbenzol | 1,329 | 0,14 |
| 6 | Methylenchlorid/Chlorbenzol (60/40) | 1,296 | 0,18 |

**) und ***) Siehe Fußnote zur Tabelle II.

5

Tabelle II

Beurteilung der Brennbarkeit

| Beispiel | eingelagertes Salz | Menge (Gew.-%, bezogen auf Gewicht Polycarbonat) | Beurteilung nach UL-94 | | Gesamtnachbrennzeit*) (s) |
|---|---|---|---|---|---|
| | | | 3,2 mm | 1,6 mm | |
| 1 | — | — | V2 | V2 | 104 |
| 2 | Kaliumperfluorbutansulfonat | 0,008 | V1 | V2 | 36 |
| 3 | Kaliumperfluorbutansulfonat | 0,025 | V0 | V2 | 23 |
| 3a | Kaliumperfluorbutansulfonat (Vergleichsversuch) | 0,025 | V2 | V2 | 83 |
| 3b | Kaliumperfluorbutansulfonat (Vergleichsversuch) | 0,025 | V2 | V2 | 79 |
| 4 | Kaliumbromid | 0,009 | V1 | V2 | 63 |
| 5 | Kaliumsalz der 2-Ethyl-n-capronsäure | 0,014 | V1 | V2 | 38 |
| 6 | Kaliumperfluorbutansulfonat und Kaliumbromid | 0,013 0,005 | V0 | V2 | 25 |

*) Zu den Bewertungskriterien für die Einstufung nach UL-94 gehören die durchschnittlichen Nachbrennzeiten je Prüfkörper, die aus der Summe der Nachbrennzeiten eines Prüfkörpersatzes berechnet werden. Angegeben sind die Summen der Nachbrennzeiten von 5 Prüfkörpern der Dicke 1,6 mm.

**) Das Salz wurde dem Polycarbonat über Compoundierung mit einer Zweiwellenschnecke zugemischt.

***) Das Salz wurde gemäß DOS 2 744 018 über eine wäßrige Lösung auf das Polycarbonatgranulat aufgebracht und anschließend mit einer Zweiwellenschnecke homogenisiert.


## Patentansprüche

1. Verfahren zur Herstellung von flammwidrigen Polycarbonaten durch Zusatz von salzartigen Flammschutzmitteln, dadurch gekennzeichnet, daß die salzartigen Flammschutzmittel als wäßrige Lösungen in den neutral und elektrolytfrei gewaschenen Lösungen der Polycarbonate in organischen Lösungsmitteln so dispergiert, daß der mittlere Teilchendurchmesser der wäßrigen Phase unter 2 µm liegt, und danach durch Abdampfen des Lösungsmittels und des Wassers die Polycarbonate in üblicher Weise isoliert werden.

2. Verfahren gemäß Anspruch 1, dadurch gekennzeichnet, daß als salzartige Flammschutzmittel Alkalisalze oder Erdalkalisalze eingesetzt werden.

3. Verfahren gemäß Anspruch 1 und 2, dadurch gekennzeichnet, daß die salzartigen Flammschutzmittel in Mengen von 0,001 bis 5 Gew.-%, bezogen jeweils auf Gesamtgewicht aus Polycarbonat und salzartigem Flammschutzmittel, eingesetzt werden.


## Claims

1. A process for the production of non-flammable polycarbonates by adding saline flameproofing agents, characterised in that the saline flameproofing agents are dispersed in organic solvents as aqueous solutions in the solutions of the polycarbonates which are washed until neutral and free of electrolyte, such that the average particle diameter of the aqueous phase is below 2 µm, and the polycarbonates are then isolated in conventional manner by evaporating the solvent and the water.

2. A process according to claim 1, characterised in that alkali metal salts or alkaline earth salts are used as saline flameproofing agents.

3. A process according to claims 1 and 2, characterised in that the saline flameproofing agents are used in quantities of from 0.001 to 5% by weight, in each case based on the total weight of polycarbonate and saline flameproofing agent.

## Revendications

1. Procédé de production de polycarbonates résistant à la flamme par addition d'agents retardateurs de flamme du type de sels, caractérisé en ce que les agents retardateurs de flamme du type de sels sont dispersés sous forme de solutions aqueuses dans les solutions, lavées jusqu'à ce qu'elles soient neutres et dépourvues d'électrolytes des polycarbonates dans des solvants organiques de manière que le diamètre moyen des particules de la phase aqueuse soit inférieur à 2 μm, et les polycarbonates sont ensuite isolés de manière classique par évaporation du solvant et de l'eau.

2. Procédé suivant la revendication 1, caractérisé en ce qu'on utilise comme agents retardateurs de flamme du type de sels, des sels alcalins ou des sels alcalino-terreux.

3. Procédé suivant les revendications 1 et 2, caractérisé en ce que les agents retardateurs de flamme du type de sels sont utilisés en quantités de 0,001 à 5% en poids, dans chaque cas, par rapport au poids total de polycarbonate et d'agent retardateur de flamme du type d'un sel.